# EUROPEAN PATENT APPLICATION

(11) **EP 2 288 123 A2**
(43) Date of publication of application: **23.02.2011**
(21) Application number: 10173015.8
(22) Date of filing: 17.08.2010
(51) Int. Cl.: H04M 1/725, H04M 19/04

(54) **Method of informing occurrence of a missed event and mobile terminal using the same**

(30) Priority: 19.08.2009 KR 20090076800
(71) Applicant: SAMSUNG ELECTRONICS CO., LTD., Suwon-si, Gyeonggi-do (KR)
(72) Inventor: Kim, Hyang Ah, Gyeonggi-do (KR); Um, Tae Won, Gyeonggi-do (KR); Shin, Dong Jun, Gyeonggi-do (KR); Kim, Kyoung Taek, Gyeonggi-do (KR); Kim, Kyung Hwa, Gyeonggi-do (KR)
(74) Representative: Jenkins, Richard Gavin

(57) **Abstract**

A method of informing occurrence of an event and a mobile terminal using the same are disclosed. The method includes: determining whether a missed event occurs; sensing a user's attention to the mobile terminal; and informing the occurrence of the missed event when the user's attention is sensed. Since the mobile terminal informs the occurrence of the missed event only when the user gives attention to his/her mobile terminal, the number of times for informing the missed event is reduced and damage of people around the mobile terminal and power consumption of the mobile terminal caused by sound or vibration of informing the occurrence of the event can be minimized.

## Description

### BACKGROUND OF THE INVENTION

### Field of the Invention

The present invention relates generally to the field of mobile terminals and more particularly, to a method of informing a user of an occurrence of a missed event.

### Description of the Related Art

Mobile terminal are becoming rapidly more popular as many people find such devices as being one of necessity in today's modern world. Because o the capability in providing an inherent voice call service, an data communication, and various supplementary services, mobile terminals have changed into a functional multimedia communication device.

In general, a mobile terminal informs a user an occurrence of an event such as a call reception, a message reception, and the like, through generation of a sound and/or a vibration such that the user may check the event. When the user is remote from their mobile terminal or does not recognize the occurrence of an incoming event, the user cannot check the event and a missed event is indicated. With the occurrence of the missed event, the mobile terminal provides an indication (a sound or vibration) of the occurrence of the missed event on a preset cycle. When the provided indication of the missed event continues regardless of the user's long absence, the sound and/or vibration generated from the mobile terminal disturbs people around the mobile terminal. Furthermore, the generation of the sound or vibration generated for the indication of the missed event expends power of the mobile terminal, resulting in reduced operational usage of the mobile terminal (device).

The user may wish to check only whether a missed event occurs. In this case, the user may watch a display screen to check whether the missed event occurs. When it is hard to watch the display screen, the user feels difficulty to know whether the missed event occurs.

The present invention proposes a method of effectively informing a user of the occurrence of a missed event in a mobile terminal.

### SUMMARY OF THE INVENTION

The present invention has been made in view of the above problem, and the present invention provides an event informing method of a mobile terminal enabling to reduce the inconvenience to people around a mobile terminal caused by sound and vibration of the mobile terminal and to extend operational usage of the mobile terminal.

The present invention also provides an event informing method of a mobile terminal enabling a user to check whether a missed event has occurred.

The present invention also provides a mobile terminal using an event informing method enabling a user to check whether a missed event has occurred.

In accordance with the aspects of the present invention, there is provided a method of informing a user of an occurrence of an event in a mobile terminal including: determining whether a missed event occurs; sensing a user's attention to the mobile terminal; and informing the user of the occurrence of the missed event when the user's attention is sensed.

In accordance with an aspect of the present invention, there is provided a mobile terminal including: a user attention-sensing module sensing a user's attention to the mobile terminal; and a control unit determining whether at least one missed event has occurred, controlling the user attention-sensing module to sense the user's attention to the mobile terminal when the missed event occurs, and informing the user of the occurrence of the missed event when the user's attention is sensed.

In accordance with another aspect of the invention, a portable terminal comprises a receiving unit; an input unit; and a controller comprising: a processor in communication with a memory, the memory including code, which when accessed by the processor, causes the processor to: receive a message from the receiving unit; receive an input from the input unit, within a preset time from receiving the message from the receiving unit; and limit an indication of the received message when the input is not received within the preset time and deem the received message a missed message.

Since the mobile terminal informs the user of the occurrence of the missed event only when the user provides their attention to the mobile terminal, the number of times for informing the missed event is reduced and inconvenience to people around the mobile terminal and power consumption of the mobile terminal can be reduced. Moreover, the user may know whether a missed event has occurred with a contact with the mobile terminal or with an input of a simple *motion.*

### BRIEF DESCRIPTION OF THE DRAWINGS

The above and other aspects, features and advantages of certain embodiments of the present invention will be more apparent from the following description taken in conjunction with the accompanying drawings, in which:
FIG. 1 is a block diagram illustrating a mobile terminal to inform a user of an occurrence of a missed event according to an exemplary embodiment of the present invention;
FIG. 2 is a flowchart view illustrating informing a user of an occurrence of a missed event according to an exemplary embodiment of the present invention;
FIG. 3 is a flowchart illustrating informing a user of an occurrence of a missed event according to another exemplary embodiment of the present invention;
FIG. 4 is an exemplary view illustrating a case to which the method of informing a user of an occurrence of a missed event according to the exemplary embodiment of the present invention;
FIG. 5 is another exemplary view illustrating a case a method of informing a user of an occurrence of a missed event according to the exemplary embodiment of the present invention; and
FIG. 6 is still another exemplary view illustrating a case of a method of informing a user of an occurrence of a missed event according to the exemplary embodiment of the present invention.

### DETAILED DESCRIPTION OF THE INVENTION

Exemplary embodiments of the present invention are described in detail with reference to the accompanying drawings. The same reference symbols are used throughout the drawings to refer to the same or like parts. Detailed descriptions of well-known functions and structures incorporated herein may be omitted to avoid obscuring the subject matter of the present invention.

Accordingly, the meaning of specific terms or words used in the specification and the claims should not be limited to the literal or commonly employed sense, but should be construed in accordance with the spirit of the invention. The description of the various embodiments described herein is to be construed as exemplary only and does not describe every possible instance of the invention. Therefore, it should be understood that various changes may be made and equivalents may be substituted for elements of the invention, without altering the scope of the invention

The term "event," used in the following exemplary embodiments of the present invention refers to events related to outgoing and incoming calls of a mobile terminal and may be set by a user of the mobile terminal. For example, events related to calls and text messages, such as outputting calls, incoming calls, incoming messages, and outgoing messages and alarm events that may be set by a user, such as a morning call, an alarm, and schedule correspond to the term "events."

The term a "missed event" refers to an event unconfirmed by a user among the events received by a mobile terminal or the events set by the user, and the term a "confirmed event" refers to an event confirmed by the user.

The exemplary embodiments of the present invention are provided with reference to configuration of a mobile terminal and drawings illustrating exemplary screens.

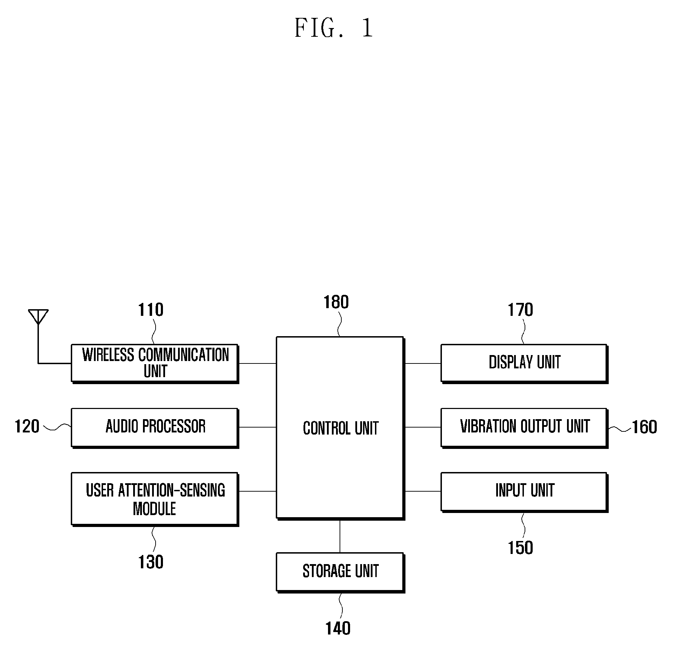

FIG. 1 is a block diagram illustrating a mobile terminal to inform a user of an occurrence of a missed event according to an exemplary embodiment of the present invention.

A wireless communication unit 110 performs data transmission and reception of data for wireless communication of a mobile terminal. The wireless communication unit 110 may include an RF transmitter (not shown) for performing up-conversion and amplifying of frequencies of a signal to-be transmitted and an RF receiver (not shown) performing low amplifying and down conversion of frequencies of a received signal. The wireless communication unit 110 may receive data through a wireless channel and output the data to a control unit 180, and may transmit data output from the control unit 180 through the wireless channel. The wireless communication 110 receives a call or a message from a base station (not shown) and transmits an occurrence of a received call event or a received message event to the control unit 180.

An audio processor 120 may include a CODEC (coder/decoder) (not shown) wherein the CODEC includes data CODEC processing packet data and an audio CODEC processing an audio signal, such as voice. The audio processor 120 converts a digital audio signal into an analog audio signal with the audio CODEC to reproduce the converted analog audio signal through a speaker SPK (not shown) and converts an analog audio signal input from a microphone MIC (not shown) into a digital audio signal with the audio CODEC. The audio processor 120 outputs sound corresponding to occurrences of a received call event, a received message event, an alarm event, and the like, thorough the SPK.

A user attention-sensing module 130 senses whether a user provides attention to their mobile terminal. In this embodiment of the present invention, the user attention-sensing module 130 may include a touch sensor, a pressure sensor, a temperature sensor, a motion sensor, and/or a proximity sensor. The touch sensor senses a user's touch against the mobile terminal and may be a tactile sensor sensing intensity of a touch pressure and a touch position or a combination of a touch sensor and a pressure sensor. The touch sensor may be positioned at a side of the mobile terminal, sense a user's touch against the mobile terminal, and generate a sensing signal of the touch to be transmitted to the control unit 180. The user touch-sensing module 130 may be set to an inactive state and may be switched to an active state by a preset input. In this exemplary embodiment of the present invention, the user attention-sensing module 130 may be set to an active state as a basic state and the active state may be maintained. The active state of the user attention-sensing module 130 corresponds to a state of sensing whether a user gives their attention to their mobile terminal.

The temperature sensor measures ambient temperature of the mobile terminal. When the user touches their mobile terminal, the temperature sensor senses user's temperature and generates a sensing signal to be transmitted to the control unit 180.

The motion sensor sensors a motion input by the user to the mobile terminal and may include an acceleration sensor, a tilt sensor, and a gyro sensor. When the user inputs a motion to the mobile terminal, such as a motion of touching a mobile terminal, the motion sensor senses the input motion, generates a motion signal, and transmits the motion signal to the control unit 180.

The proximity sensor senses a user's approach to the mobile terminal and may include a magnetic proximity sensor and a capacitive proximity sensor. When a user reaches out their hand for the mobile terminal and a user's hand is positioned in a sensible region, the proximity sensor senses the user's reach and generates a sensor signal to the control unit 180.

The user attention-sensing module 130 may include any one of or a combination of the above-mentioned sensors.

A storage unit 140 stores a program and data, which are required to operate the mobile terminal, and may be divided into a program region (not shown) and a data region (not shown). The storage unit 140 may include a volatile storage medium, a nonvolatile storage medium, or a combination thereof. The volatile storage medium may include a semiconductor memory such as RAM, DRAM, and SRAM, and the nonvolatile storage medium may include a hard disk or a semiconductor memory, such as PROM and FLASH. In this exemplary embodiment of the present invention, the storage unit 140 stores information on a method of informing a user of a missed event corresponding to user's attention sensed by the user attention-sensing module 130. For example, the storage unit 140 may store a vibration output in response to an input of grasping the mobile terminal. When the user attention-sensing module 130 includes a plurality of sensors, the storage unit 140 may store a method of informing a user of an occurrence of a missed event corresponding to the sensors sensing the user's attention. The storage unit 140 stores information regarding an alarm event such as a morning call, alarm, and schedule that may be set by the user. In this exemplary embodiment of the present invention, the storage unit 140 may store information regarding an event of requiring an urgent confirm.

An input unit 150 receives a key manipulation signal for the control of the mobile terminal and transmits the received key manipulation signal to the control unit 180. The input unit 150 may be a keypad such as a 3*4 keypad or a QWERTY keypad including numeric keys, character keys, and arrow keys or a touch pad. The input unit 150 generates an input signal for executing functions of the mobile terminal in response to a user input and transmits the generated input signal to the control unit 180.

A vibration output unit 160 generates and outputs a vibration signal and includes a vibration motor. The vibration output unit 160 generates and outputs a vibration under the control of the control unit 180.

A display unit 170 may include a liquid crystal display (LCD), or other known types of displays (LED, OLED), and may provide a menu of the mobile terminal, input data, function setting information, and various types of other information to the user in a visual way. For example, the display unit 170 outputs a booting screen, a standby screen, a display screen, a dialing screen, and an execution screen of an application. In this exemplary embodiment of the present invention, the display unit 170 displays a message indicating an occurrence of an event or a missed event under the control of the control unit 180.

The control unit 180 controls overall operation of the mobile terminal and signal flow among the physical and logical internal blocks of the mobile terminal. The control unit 180 controls the wireless communication unit 110 to determine whether an event related to reception and/or sending of terminal message has occurred. The control unit 180 searches the storage unit 140 to generate an alarm event set by the user. In this exemplary embodiment of the present invention, the control unit 180 determines whether a missed event occurs. When an incoming call occurs through the wireless communication unit 110 and a user response is not detected or sensed through the input unit 150, the control unit 180 determines the occurrence of a missed event. When an incoming text message event occurs through the wireless communication unit 110 and a user response is not detected through the input unit 150 within a preset time, the control unit 180 deems that a missed event has occurred. The control unit 180 searches the storage unit 140 and generates an alarm event set by the user. The control unit 180 controls the user attention-sensing module 130 to be switched from the inactive state to the active state (if the sensor module is not already in an active state). The control unit 180 controls the user attention-sensing module 130 to determine whether the user provides their attention to the mobile terminal. In a case when the user attention-sensing module 130 includes a touch sensor or a temperature sensor, the control unit 180 controls the user attention-sensing module 130 to determine whether the user touches their mobile terminal. In a case when the user attention-sensing module 130 includes a motion sensor, the control unit 180 controls the user attention-sensing module 130 to sense whether the user inputs a motion to the mobile terminal. When the user attention-sensing module 130 includes a proximity sensor, the control unit 180 controls the user attention-sensing module 130 to sense whether the user approaches within a preset distance of the mobile terminal.

When the user gives attention to the mobile terminal through the user attention-sensing module 130, the control unit 180 controls the vibration output unit 160, the display unit 170, and/or the audio processor 120 to output the occurrence of the missed event.

In this exemplary embodiment of the present invention, the control unit 180 may determine whether the missed event is listed in an event list required for an urgent confirmation. When the missed event is contained in the event list required for an urgent confirmation, the control unit 180 controls the vibration output unit 160, the display unit 170, and/or the audio processor 120 regardless of the user's attention to inform the user of the occurrence of the missed event. When the missed event is not contained in the list required for the urgent confirmation, the control unit 180 controls the user attention-sensing module 130 to determine whether the user has provided their attention to the mobile terminal.

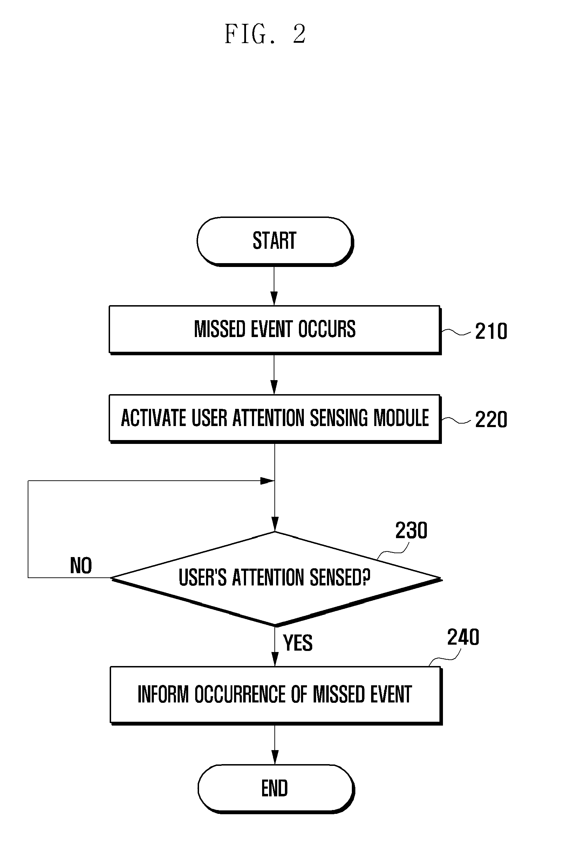

FIG. 2 is a flowchart view illustrating a method of informing a user of an occurrence of a missed event according to an exemplary embodiment of the present invention.

The control unit 180 determines whether a missed event has occurred (210). The control unit 180 determines whether an event occurs firstly for the determination of the occurrence of the missed event. The event indicates an event related to sending and reception and an alarm event set by the user, wherein the event related to the sending and the reception includes a sending call event, an incoming call event, an incoming message event, and a sending message event and the alarm event set by the user includes, for example, a morning call event, an alarm event, and a schedule event. When an event occurs, the control unit 180 controls the audio processor 120, the vibration output unit 160, and/or the display unit 170 to inform the user of the occurrence of the event. Then, the control unit 180 determines whether a confirmation command is input through the input unit 150 by the user. The control unit 180 outputs information informing the user of the occurrence of the event. After that, the control unit 180 classifies the occurred event into a confirmed event when the confirmation command is input by the user and into a missed event when the confirmation command is not input. The control unit 180 deems a missed event has occurred when the occurred event is classified as a missed event.

For example, in a case where the occurred event corresponds to an incoming call event, when an input signal that the user input the confirmation command is received from the input unit 150 while the control unit 180 controls the wireless communication unit 110 to receive an incoming call and controls the audio processor 120, the vibration output unit 160, and/or the display unit 170 to inform the user of the occurrence of the event, the control unit 180 classifies the incoming call event as a confirmed event. When the input signal that the user inputs the confirmation command is not received from the input unit 150 while the wireless communication unit 110 receives the incoming call, the control unit 180 finishes the process of informing the user of the occurrence of the event and classifies (deems) the incoming call event as a missed event.

In a case where the occurred event corresponds to an incoming message event, the control unit 180 controls the wireless communication unit 110 to receive the message, controls the audio processor 120, the vibration output unit 160, and/or the display unit 170 to inform the user of the occurrence of the incoming message event, and determines whether the confirmation command is input by the user through the input unit 150 within a preset time. In this exemplary embodiment of the present invention, the control unit 180 may determine whether the confirmation command is input by the user through the input unit 150 during the period of informing the user of the occurrence of the event. It would be recognized that controller may provide an indication of the occurrence of the event a preset number of times through the audio processor 120, the display unit 170, and/and the vibration output unit 160.

When the occurred event corresponds to an alarm event set by the user, the control unit 180 controls the audio processor 120, the vibration output unit 160, and/or the display unit 170 to inform the user of the occurrence of the alarm event, and determines whether the confirmation command is input by the user through the input unit 150 within a preset time. The preset time may be a time of informing the user of the alarm event and may be set by the manufacturer of the mobile device or by the user.

The control unit 180 determines whether the confirmation command is input by the user through the input unit 150 and deems that the missed event has occurred when the confirmation command is not input during the preset time.

When the missed event occurs, the control unit 180 activates the user attention-sensing module 130 (220). In this exemplary embodiment of the present invention, the user attention-sensing module 130 may maintain the inactive state in the standby state. The inactive state of the user attention-sensing module 130 may correspond to a state that at least one sensor module of the user attention-sensing module 130 does not work, or that the at least one sensor module works but is in a low power mode, that is, cannot sense whether the user gives his/her attention to his/her mobile terminal. When the missed event occurs, the control unit 180 switches the user attention-sensing module 130 from the inactive state to the active state (if the attention sensing module 130 is not in the active state).

The control unit 180 controls the user attention-sensing module 130 to sense whether the user provides their attention to the mobile terminal (230). In this exemplary embodiment of the present invention, it is assumed that the user attention-sensing module 130 includes at least one of a touch sensor, a temperature sensor, a motion sensor, and a proximity sensor, but the present invention is not limited thereto. The user attention-sensing module 130 may include other types of sensing units, such as a touch input and/or a touch-less input against the mobile terminal.

When the user attention-sensing module 130 includes a touch sensor or a temperature sensor, the control unit 180 controls the user attention-sensing module 130 to sense whether the user touches their mobile terminal. For example, when the user attention-sensing module 130 is installed at a side of the mobile terminal, the control unit 180 senses whether the user grasps the mobile terminal. The touch sensor senses a position where the user touches the mobile terminal and/or an intensity of pressure of the touch. The sensor may then generate a signal to be transmitted to the control unit 180. Similarly, a temperature sensor senses a change of temperature and generates a signal to be transmitted to the control unit 180. The control unit 180 determines whether the user has provided their attention to the mobile terminal through the signals received from the touch sensor and/or the temperature sensor.

When the user attention-sensing module 130 includes a motion sensor, the control unit 180 controls the user attention-sensing module 130 to sense whether the user inputs a motion to the mobile terminal. The motion input by the user may include a tapping, a snapping, and a shaking. The motion sensor senses a change of acceleration (i.e., motion) to generate a signal and transmits the generated signal to the control unit 180. In this exemplary embodiment of the present invention, the motion may include a simple motion such that the user touches the mobile terminal.

When the user attention-sensing module 130 includes a proximity sensor, the control unit 180 controls the user attention-sensing module 130 to sense whether the user approaches within a preset distance from the mobile terminal. The proximity sensor may be installed at a position of the display screen of the mobile terminal or at the upper side, the lower side, and lateral sides of the mobile terminal. In a case where the proximity sensor is installed at a position of the display screen of the mobile terminal, then when the user reaches out their hand for the display screen, the proximity sensor senses the user's approach to the mobile terminal.

The motion that the user touches the mobile terminal, that the user inputs a motion to the mobile terminal, or that the user approaches the mobile terminal correspond to a motion that the user has provided their attention to the mobile terminal. In this case, the user attention-sensing module 130 generates a signal and transmits the generated signal to the control unit 180. The control unit 180 receives the signal and determines that the user has provided their attention to the mobile terminal.

The control unit 180 controls the vibration output unit 160, the display unit 170, and/or the audio processor 120 to inform the user of the occurrence of the missed event. The audio processor 120 is controlled to output a sound, since people around the mobile terminal may be disturbed. However, the control unit 180 may control only the vibration output unit 160 or the display unit 170 to inform the user of the occurrence of the missed event. The control unit 180 may control either the vibration output unit 160 or the display unit 170 to inform the user of the occurrence of the missed event. The control unit 180 may further classify the missed event as a missed incoming call event, a missed incoming message event, a missed alarm event according to types of the missed events and may control the vibration output unit 160 to output a sound in the form of vibration patterns corresponding to the type of the events. Thus, the user may perceive which missed event occurs without checking the display unit 170. The control unit 180 controls the display unit 170 to display information regarding the missed event, such as a sender of a message or a call, and alarm information and may control only the display unit 170 to display the information on the missed event by excluding the vibration output. When a signal indicating that the user inputs a confirmation command for the event is received, the control unit 180 processes the event as a confirmed event.

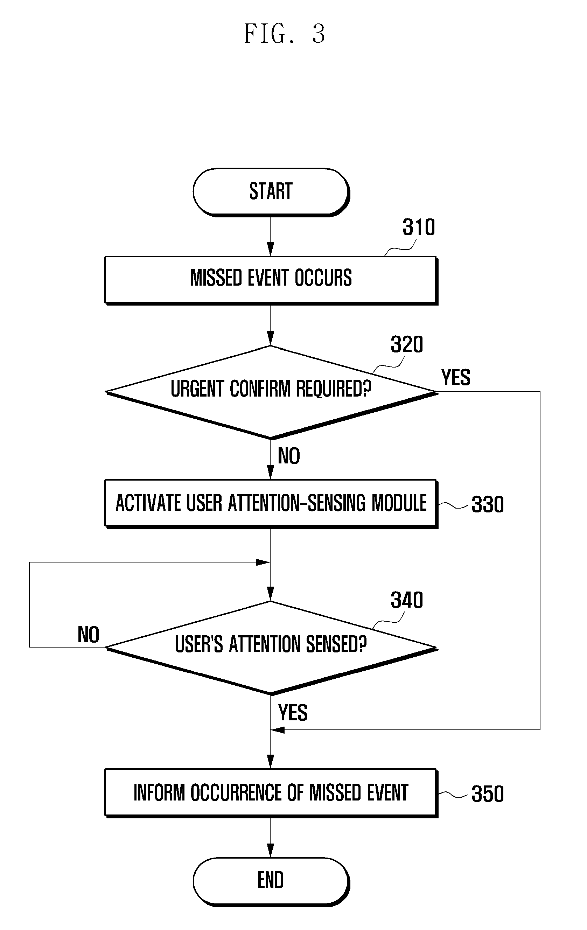

FIG. 3 is a flowchart illustrating a process for informing a user of an occurrence of a missed event according to another exemplary embodiment of the present invention.

Step 310 is identical to step 210 of FIG. 2. That is, the control unit 180 determines whether an event has occurred and when an event has occurred, the control unit 180 determines whether a confirmation command is input by the user through the input unit 150. The occurred event is classified into a confirmed event when the confirmation command is input within a preset time, and into a missed event when the confirmation command is not input within a preset time. The control unit 180 deems the occurred event a missed event when the confirmation message is not received within a preset time

The control unit 180 determines whether the missed event corresponds to an event required to be urgently confirmed (320). The storage unit 140 may store a list of events to be urgently confirmed. For example, an incoming 'urgent text message' event among the incoming text message events may be stored in a list of events required to be urgently confirmed. Such messages may be set by the user. For example, messages from the user's employer, business partner or wife, may be deemed 'urgent text message.' Similarly, the urgent text message may be determined by a priority attached to the message.

Moreover, an incoming call event repeated more than a preset number of times may be stored in the list of the events requiring an urgent confirmation. That is, when an incoming call event is repeated from an identical phone number and the user does not confirm the repeated incoming call, the control unit 180 may deem the occurred event as an event to be urgently confirmed. When the occurred missed event is deemed as the event to be urgently confirmed, the control unit 180 proceeds to step 350 and controls the vibration output unit 160, the display unit 170, and/or the audio processor 120 to inform the user of the occurrence of a missed event. In a case of the event is to be urgently confirmed, the mobile terminal may inform the user of the occurrence of a missed event continuously such that the user provides their attention to the mobile terminal.

When the occurred missed event is not an event to be urgently confirmed, the control unit 180 proceeds to step 330 to activate the user attention-sensing module 130 and controls the user attention-sensing module 130 to sense whether the user provides their attention to the mobile terminal (340). When the user attention-sensing module 130 senses the user's attention is provided to the mobile terminal, the user attention-sensing module 130 generates a signal and transmits the generated signal to the control unit 180. The control unit 180 controls the vibration output unit 160, the display unit 170, and/or the audio processor 120 to inform the user of the occurrence of a missed event (350). Steps 330, 340, and 350 are identical to steps 220, 230, and 240 of FIG. 2 and descriptions related to steps of FIG. 2 are identical to steps of FIG. 3. In a case of an event in which an urgent confirmation is not required, the mobile terminal does not need to lead the user into providing their attention to the mobile terminal. Only in the case that an urgent confirmation is required by the user will the occurrence of the missed event be continuously provided to the user. So inconvenience of people around the mobile terminal and undesired power consumption of the mobile terminal may be reduced.

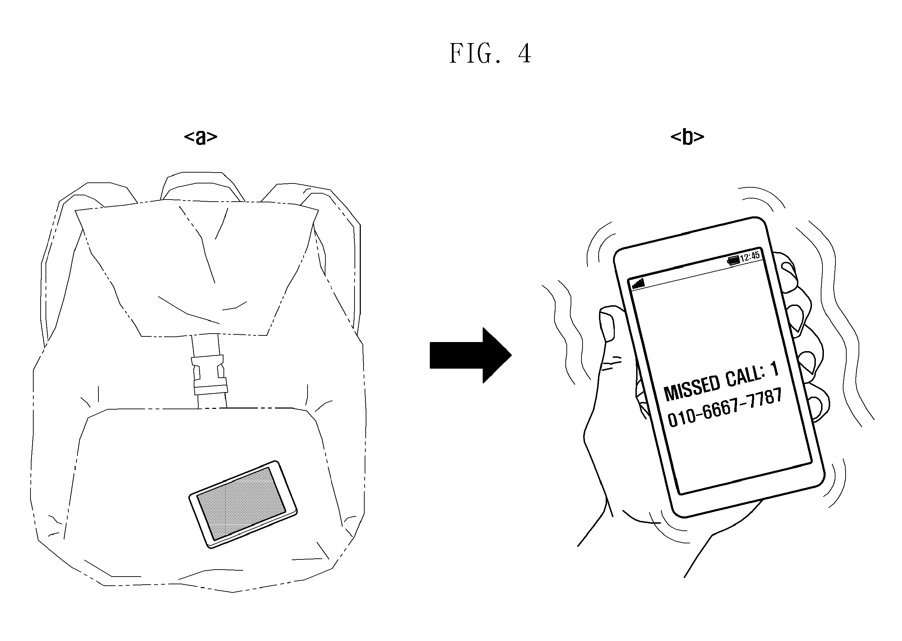

FIG. 4 is an exemplary view illustrating a case to which the method of informing a user of an occurrence of a missed event according to the exemplary embodiment of the present invention. In this case, it is assumed that the user attention-sensing module 130 of a mobile terminal illustrated in FIG. 4 includes a touch sensor or a temperature sensor.

Illustration [a] of FIG. 4 shows a case when a mobile terminal is in a bag. In this case, the control unit 180 of a mobile terminal confirmed the occurrence of a missed event, activates the user attention-sensing module 130, and controls the user attention-sensing module 130 to sense whether the provides their attention to the mobile terminal. In the illustration [a] of FIG. 4, the user inserts their hand into the bag and provides a motion to the mobile terminal in order to indicate that the user has provided their attention to the mobile terminal. Illustration [b] of FIG. 4 shows the user grasping the mobile terminal in the bag. The control unit 180 of the mobile terminal receives a signal from the user attention-sensing module 130 to determine that the user has grasped the mobile terminal and controls the vibration output unit 160 to a output vibration signal. The control unit 180 may determine a type of the occurred missed event, extract a vibration pattern corresponding to the type of the missed event, and control the vibration output unit 160 to output a vibration signal according to the extracted vibration pattern. The control unit 180 may control the display unit 170 to display information on the missed event. On the display screen of the mobile terminal, a caller phone number, for example, '010-6667-7787' corresponding to the message 'one missed call' is displayed.

Referring to FIG. 4, whether the missed event occurs may be checked by only a motion of inserting a user's hand into the bag and of grasping the mobile terminal. In a case when the vibration pattern is set according to the type of the missed event, the vibration pattern is checked to perceive the type of the missed event.

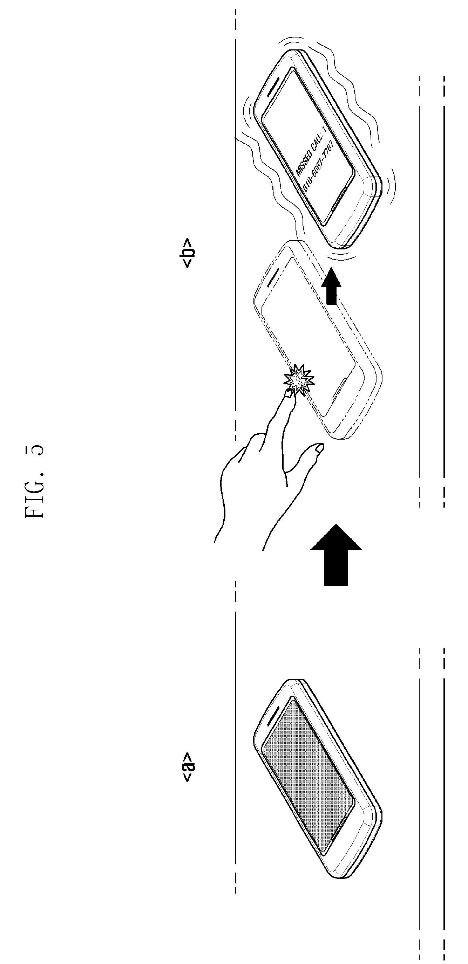

FIG. 5 is another exemplary view illustrating a case to which the method of informing a user of the occurrence of a missed event according to the exemplary embodiment of the present invention. In this case, the user attention-sensing module 130 of FIG. 5 includes a motion sensor.

Illustration [a] of FIG. 5 shows a mobile terminal on a table. The control unit 180 of a mobile terminal determined the occurrence of a missed event, activates the user attention-sensing module 130, and controls the user attention-sensing module 130 to sense whether the user provides their attention to the mobile terminal. In illustration [a] of FIG. 5, the user touches the mobile terminal in order to provide their attention to the mobile terminal. Illustration [b] of FIG. 5 shows the user touching the mobile terminal. The control unit of the mobile terminal receives a signal from the user attention-sensing module 130 and determines whether the user inputs a motion to the mobile terminal. The control unit 180 controls the vibration output unit 160 to output a vibration signal. In a case where the vibration pattern is set according to the type of missed event, the control unit 180 may extract a set vibration patterns and output a vibration signal according to the extracted vibration pattern. The control unit 180 may control the display unit 170 to display information regarding the missed event. On the display screen of the mobile terminal shown in Illustration [b] of FIG. 5, a message 'one missed call' and a telephone number '010-6667-7787' may be displayed.

As described with reference to FIG. 5, whether the missed event occurs is checked through only a motion of touching the mobile terminal, whether the missed event occurs may be perceived through the vibration output of the mobile terminal, and the information regarding the occurred missed event may be confirmed through the display screen.

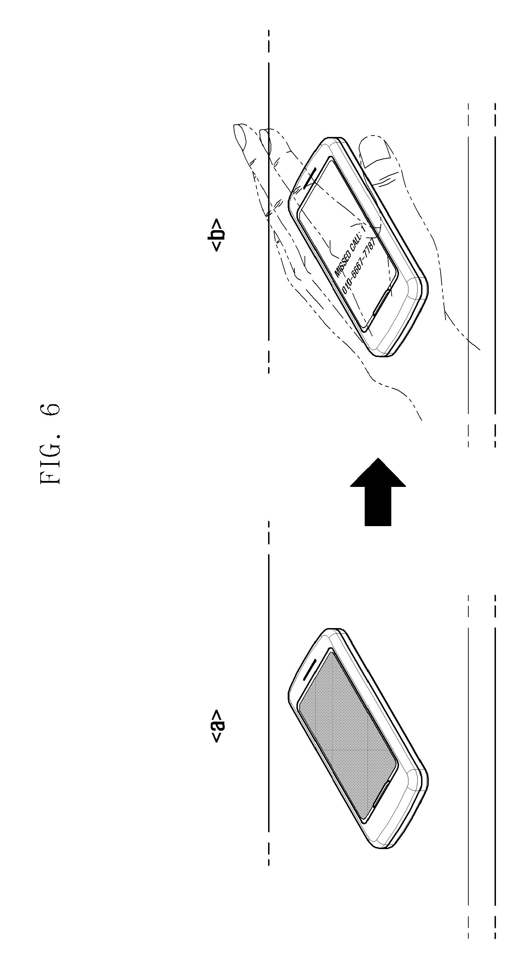

FIG. 6 is still another exemplary view illustrating a case of informing a user of an occurrence of a missed event according to an exemplary embodiment of the present invention.

In this case, the user attention-sensing module 130 of FIG. 6 includes a proximity sensor.

Illustration [a] of FIG. 6 shows a mobile terminal on a table. The control unit 180 of a mobile terminal determines the occurrence of a missed event, activates the user attention-sensing module 130, and controls the user attention-sensing module 130 to sense whether the user has provided their attention to the mobile terminal. As shown in illustration [b] of FIG. 6, the user reaches out their hand for the display screen of the mobile terminal in order to indicate attention to the mobile terminal. Illustration [b] of FIG. 6 shows that the user reaches out their hand to the display screen. The control unit 180 of the mobile terminal receives a signal from the user attention-sensing module 130 and determines that the user's hand is within a known distance to the mobile terminal. The control unit 180 controls the display unit 170 to display information regarding the missed event. On the display screen of the mobile terminal, as illustrated in Illustration [b] of FIG. 6, the message 'one missed call' and phone number '010-6667-7787' are displayed.

The control unit 180 may control the vibration output unit 160 to output a vibration, and may extract a set vibration pattern to output the vibration according to the extracted vibration pattern when the vibration pattern is set according to types of the missed events.

As described with reference to FIG. 6, whether the missed event occurs is checked through only the motion of approaching the mobile terminal, and the information regarding the occurred missed event may be confirmed through the display screen of the mobile terminal.

The above-described methods according to the present invention can be realized in the controller in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer is loaded with, or accesses, code that may be stored in a memory component, the general purpose computer is transformed into a special purpose computer suitable for at least executing and implementing the processing shown herein.

While exemplary embodiments of the present invention have been shown and described in this specification, it will be understood by those skilled in the art that various changes or modifications of the embodiments are possible without departing from the spirit and scope of the invention as defined by the appended claims.

## Claims

1. A method for informing a user of an occurrence of an event in a mobile terminal **characterized by**:
determining whether a missed event occurs (210);
sensing a user's attention to the mobile terminal (220); and
informing the user of the occurrence of the missed event when the user's attention is sensed (240).

2. The method of claim 1, further **characterized by** activating a module to sense the user's attention to the mobile terminal (220).

3. The method of claim 1, further **characterized by**:
determining whether the missed event is included in an event list requiring preset urgent confirm (320);
wherein the sensing of the user's attention is performed when the missed event is excluded from the event list requiring the preset urgent confirm.

4. The method of claim 1, wherein the missed event corresponds to at least one of a missed incoming call, a missed message, and a missed alarm.

5. The method of claim 1, wherein, in the sensing of the user's attention, whether the user touches the mobile terminal or inputs a motion to the mobile terminal is sensed.

6. The method of claim 1, wherein, in the sensing of the user's attention, whether the user approached the mobile terminal within a preset distance from the mobile terminal is sensed.

7. The method of claim 1, wherein, in the informing of the occurrence of the missed event, at least one of a vibration is generated and output, and a message including information of the missed event is displayed.

8. The method of claim 1, wherein the informing of the occurrence of the missed event comprises:
extracting a vibration pattern corresponding to the missed event; and
generating and outputting a vibration according to the extracted vibration pattern.

9. A mobile terminal **characterized by**:
a user attention-sensing module (130) sensing a user's attention to the mobile terminal; and
a control unit (180) determining whether at least one missed event has occurred (210), controlling the user attention-sensing module (130) to sense the user's attention to the mobile terminal when the missed event occurs, and informing a user of the occurrence of the missed event when the user's attention is sensed (240).

10. The mobile terminal of claim 9, wherein the user attention-sensing module (130) comprises at least one of a sensor to sense whether a user touches the mobile terminal, a sensor to sense whether the user inputs a motion to the mobile terminal, and a sensor to sense whether the user approaches the mobile terminal within a preset distance from the mobile terminal.

11. The mobile terminal of claim 9, further comprising a wireless communication unit (110) to receive a call and a message,
wherein the control unit controls the wireless communication unit to receive the call and the message and determines whether a missed message occurs.

12. The mobile terminal of claim 9, further **characterized by**
a storage unit (140) to store alarm information set by a user,
wherein the control unit determines whether a missed alarm occurs.

13. The mobile terminal of claim 9, further **characterized by**:
a storage unit (140) to store an event list requiring urgent confirm,
wherein the control unit determines whether the missed event is included in the event list requiring urgent confirm.

14. The mobile terminal of claim 9, further **characterized by**:
a vibration output unit (160) to generate and output a vibration,
wherein the control unit controls the vibration output unit to generate and output the vibration.

15. The mobile terminal of claim 9, further **characterized by**:
a display unit (170),
wherein the control unit controls the display unit to display information on the missed event.
